(19) Europäisches Patentamt
European Patent Office
Office européen des brevets

(11) Publication number: 0 021 569
A1

(12) # EUROPEAN PATENT APPLICATION

(21) Application number: 80301425.7

(22) Date of filing: 01.05.80

(51) Int. Cl.³: C 08 G 63/68
C 08 G 63/76, C 08 G 18/46

(30) Priority: 29.05.79 GB 7918685

(43) Date of publication of application: 07.01.81 Bulletin 81/1

(84) Designated Contracting States: AT BE DE FR GB IT NL

(71) Applicant: Interox Chemicals Limited
Hanover House Hanover Square
London W1R 0BE(GB)

(72) Inventor: Cardy, Charles Frederick
14 Mount Grace Road
Luton Bedfordshire(GB)

(74) Representative: Ffrench-Lynch, Cecil et al,
Group Patents Department Laporte Industries Limited P O Box 8
Luton Bedfordshire LU4 8EW(GB)

(54) **Amino-terminated polymers, process for their preparation and their use.**

(57) Polymers of the general formula I

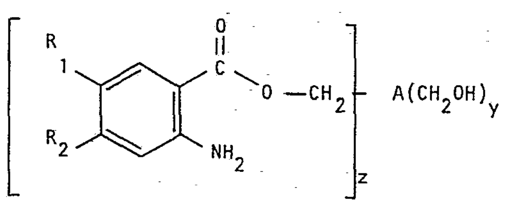

1

wherein each of $R_1$ and $R_2$, which may be the same or different, represents a hydrogen atom or a methyl group;

wherein $-A(CH_2OH)_y$ represents a straight or branched chain polymeric entity and contains plurality of ester linkages and,

wherein y has the value 0 or a positive integral value and z has a positive integral value, (y + z) being from 2 to 8.

The new polymers may be used in the production of polyureas and polyurea - polyurethanes.

EP 0 021 569 A1

AMINO-TERMINATED POLYMERS, PROCESS FOR THEIR PREPARATION AND THEIR USE

The present invention relates to polymers.

The present invention provides a polymer of the general formula I,

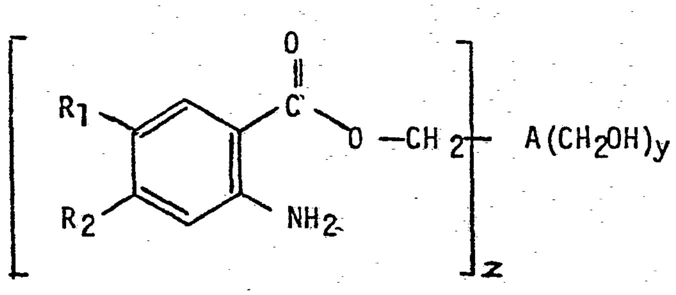

I

wherein each of $R_1$ and $R_2$, which may be the same or different, represents a hydrogen atom or a methyl group;

wherein $-A(CH_2OH)y$ represents a straight or branched chain polymeric entity having y + z chain endings and contains a plurality of ester linkages and,

wherein y has the value 0 or a positive integral value and z has a positive integral value, (y+z) being from 2 to 8.

For the avoidance of any possible doubt, it is now stated that, in the above and throughout this specification, "a plurality" is to be understood to mean "two or more".

The present invention further provides a process for

preparing a polymer of the general formula I which comprises reacting a polymer of the general formula II,

$$A(CH_2OH)_{y+z} \qquad II$$

wherein A, y, and z have the meanings already given, with a compound of the general formula III,

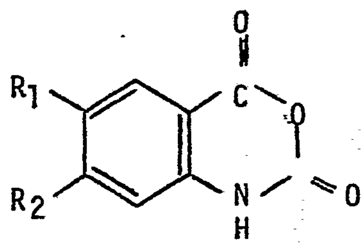

III

wherein $R_1$ and $R_2$ have the meanings already given.

It is to be understood, of course, that the polymer of the general formula I does not in general consist of molecules all having the same identity of A, y, z, $R_1$, and $R_2$ as one another. Likewise, the polymer of the general formula II will not in general consist of molecules all having the same identity of A and (y+z) as one another. In respect of the preparation of polymers of the general formula I from those of the general formula II, the following comments illustrating these points may be made :-

(a) The distribution of formulae and formula weights of A in the molecules comprising a polymer of the general formula II will be broadly reproduced in the polymer of the general formula I.

(b) z is especially likely to vary significantly form molecule to molecule in the polymer of the general formula I in those cases where the number of moles of the compound of the general formula III reacted per mole of the polymer of the general formula II is less than the value of (y + z). For instance, if one reacts together two moles of a compound of the general formula $A(CH_2OH)_3$, wherein A itself contains no groups capable of reacting with a compound of the general

formula III, then one expects to obtain a product in which there may, as well as molecules having z=2 and y=1, be molecules having z=3 and y=0, z=1 and y=2, and even z=0 and y=3 (unreacted starting material).

(c) If the polymer of general formula II includes molecules having differing values for (y+z) and/or if mixtures of compounds of the general formula III having different $R_1$s and $R_2$s are used, then of course the product will be highly complex.

In one method of use of the polymers of the general formula I, it may be desirable to use them in admixture with a substantial amount of polymers of the general formula II (see method (5) given below). It may conveniently be noted here that such a mixture can be prepared in a simple manner without a separate mixing step. Thus, for instance, the reaction of one mole of $A(CH_2OH)_2$ with one-half mole of isatoic anhydride will yield a product which includes at least 0.5 mole of unreacted $A(CH_2OH)_2$; the balance of the product being a polymer of the general formula I in admixture therewith.

The polymers of the general formula II fall within the class commonly known in the art as "polyols", and for convenience this latter term will be used in the following description to refer to the polymers of the general formula II. It is to be noted that the term "polyol" as used in the art and as used herein does cover, "inter alia", polymers which may be more specifically called diols; that is to say, the term "polyol" is to be interpreted so as to include, "inter alia", those polymers of the general formula II wherein (y + z)=2 and there are no hydroxyl groups in A.

Especially preferred polymers of the general formula I are those wherein the entity represented by $-A(CH_2OH)_y$ contains a plurality of units, any two of which may be the same or different, and each of which is of the general formula IV,

$$-CO-Y-CO-O-CH_2-X-CH_2-O- \qquad IV$$

wherein X represents a direct bond or a straight - or branched-chain alkylene group of not more than 8 carbon atoms, and wherein Y represents a straight - or branched chain alkylene group of not more than 8 carbon atoms. Among the polyols which may be used for the production of this class of polymers of general formula I are those commonly known as ethylene glycol adipate polyesters, ethylene glycol/butylene glycol adipate polyesters, and hexylene glycol adipate polyesters. The corresponding sebacate and azelate polyesters may also be used.

Another especially preferred class of polymers of the general formula I is the class of polymers wherein the entity represented by $-A(CH_2OH)y$ contains a plurality of units, any two of which may be the same of different, and each of which is of the general formula V,

$$-CO-Z-CH_2-O- \qquad V$$

wherein Z represents a straight - or branched-chain alkylene group having a chain length of 4 or more carbon atoms and having not more than 9 carbon atoms. Among the polyols which may be used for the production of this class of polymers of general formula I are polylactone polyols, especially poly(epsilon -caprolactone) polyols. Among the poly-(epsilon -caprolactone) polyols which may be used - for others see below - are the poly(epsilon -caprolactone) diols which are obtainable by the ring-opening polymerisation of epsilon -caprolactone with a relatively low molecular weight initiator, for example ethylene glycol, butylene glycol, or neopentyl glycol. In the following discussions, the term "polyester polyols" is to be understood to include polylactone polyols as well as polyester polyols such as those derived from glycols and dicarboxylic acids.

It is possible for the polymer of general formula I to contain both units of the general formula IV and of the general formula V. Among the polyols which may be used for the production of this class of polymers of general formula I are ethylene glycol-(epsilon -caprolactone)- adipate polyols.

The entity represented by $-A(CH_2OH)y$ in the general formula I may additionally include units whose presence provides one or more ether linkages. Thus the said entity may, for example include, in addition to units of the general formula IV and/or of the general formula V, a plurality of units, any two of which may be the same or different and each of which is of the general formula VI,

$$-CH_2-Q-CH_2-O- \qquad VI$$

wherein Q represents a direct bond or a straight - or branched-chain alkylene group of not more than 8 carbon atoms. In preparing such polymers one may suitably use polyether-polyester polyols which are obtainable by the polymerisation of ethylene oxide and/or tetrahydrofuran with polyester prepolymers and/or with the monomers appropriate to the production of simple polyesters.

It is possible for units of the general formula VI to be arranged in blocks within entity $-A(CH_2OH)y$. Polyols in which this is the case and from which corresponding polymers of the general formula I can be made can be conveniently prepared, for instance, by the use of diethylene glycol, polyethylene glycol, or polytetrahydrofuran as the the initiator for the ring-opening polymerisation of epsilon -caprolactone.

Preferably, the ratio of ether to ester linkages in the polymers of the general formulae I and II does not exceed 10:1; more preferably it is 5:1 or less.

Preferably, the formula weight of entity A is in the range from 300 to 5000.

(y + z) will most commonly have a value of 2, since polyester diols are more widely available than polyester triols, etc. In the case of poly(epsilon -caprolactone)

polyols, for instance, it is well known that the use of a diol as the initiator for the ring-opening polymerisation of the lactone gives a poly(epsilon -caprolactone) diol, while the use of a triol gives a poly(epsilon -caprolactone) triol, and so on; but poly(epsilon -caprolactone) diols are at present the most widely available.

Conveniently, $R_1$ and $R_2$ both represent hydrogen atoms. Polymers wherein this is the case may be prepared by the use of isatoic anhydride (the compound of the general formula III wherein $R_1 = R_2 = H$).

In order to perform the reaction between a polymer of the general formula II and a compound of the general formula III, a tertiary amine may conveniently used as a catalyst.

One may use relatively basic tertiary amines in which the N atom is bound only to saturated carbon atoms, for example 1, 4-diazabicyclo (2.2.2) octane, N, N, N', N'-tetramethylethylenediamine, and N-ethylpiperidine. One may use also the relatively less basic tertiary amines in which the N atom is bound to an aromatic ring, for example N, N-dimethylaniline and pyridine.

For the avoidance of any doubt, the formula of 1,4-diazabicyclo (2.2.2) octane is now given :-

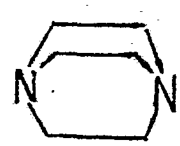

Preferably, the weight of tertiary amine used as catalyst is from 0.1 to 1 % of the total weight of the reaction mixture.

The progress of the reaction can be followed readily by observing the disappearance of the solid compound of the general formula III from the reaction mixture, and by the evolution of carbon dioxide according to the reaction :-

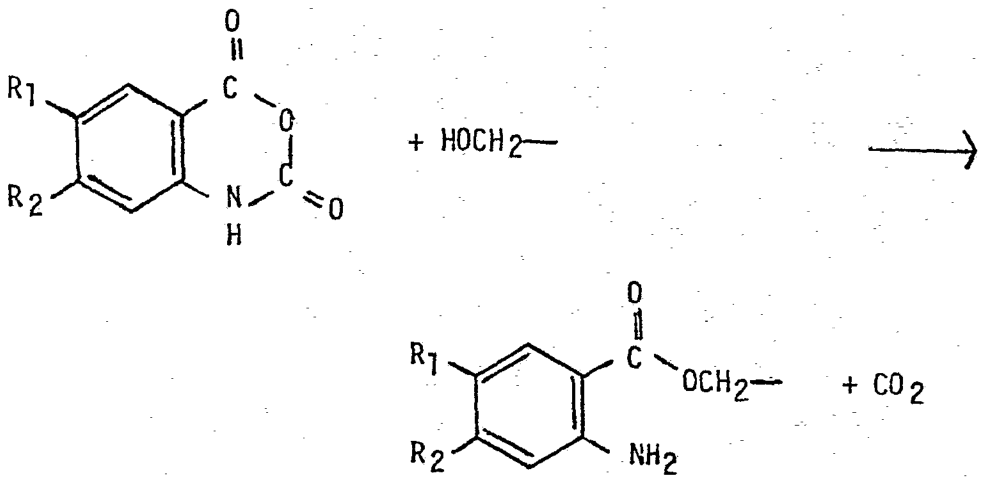

No solvent is necessary for the reaction, but one could conveniently be used so long as it did not interfere with the reaction or with the product in its subsequent application.

A convenient way of performing the reaction is to heat a reaction mixture including a tertiary amine catalyst slowly or in stages up to a temperature of from 100 °C to 160 °C, at which temperature the reaction is completed.

As a precaution against oxidation it is desirable to add one or more oxidants. Another desirable precaution against oxidation is to sparge one or more of the reactants with nitrogen under vacuum before the reaction. Thus, for example, the polyol can be sparged before addition of the anhydride and the catalyst; or a mixture of polyol and anhydride can be sparged together before the catalyst is added.

The principle value of the polymers of the general formula I as we presently see it lies in the fact that, being amino-terminated, they react with compounds containing isocyanate groups to give polymers containing urea linkages, thus :-

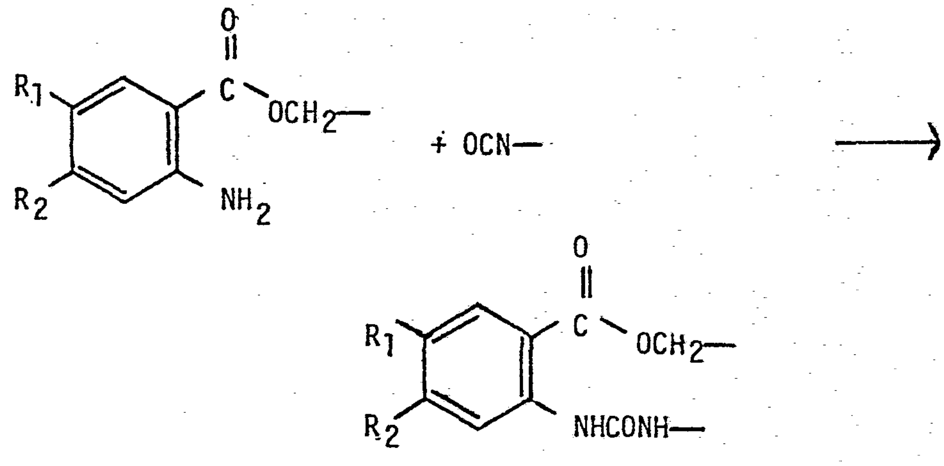

It will be noted that in contrast the polymers of the general formula II, being hydroxyl-terminated, react with compounds containing isocyanate groups to give polymers containing urethane linkages, thus :-

$$-NCO \quad + \quad HOCH_2- \quad \longrightarrow \quad -NHCOOCH_2-$$

Therefore, the polymers of the general formula I can be used in the production of further polymers, especially elastomers, which contain both ester linkages and urea linkages. Five methods of use may be especially mentioned :-

(1) A polymer of the general formula I containing no hydroxyl groups is reacted with a compound containing two or more isocyanate groups in the molecule. The product is a polyurea.

(2) Method (1) is modified by the use of an amine chain extender instead of some of the compound of the general formula I containing no hydroxyl groups. The product is again a polyurea, but the properties of the final polymer are modified.

(3) Method (1) is modified by the use of a hydroxylic or amine/hydroxylic chain extender instead of some of the compound of the general formula I containing no hydroxyl groups. The product is in this case a polurea - polyurethane, the properties of the final polymer being again modified.

(4) Any one of methods (1) to (3) is modified by the use of polymer of the general formula I containing hydroxyl groups as well as amino groups. The product in this case is a polyurea - polyurethane.

(5) Any one of methods (1) to (4) is modified by the use of a mixture of a polymer of the general formula I with a polymer of the general formula II. The product in this case is a polyurea - polyurethane.

In relation to methods (2) and (3) it is to be understood that the molecule of the "chain extender" contains at least two of the relevant groups (i.e. at least two hydroxyl groups, or at least two primary amino groups, or at least one hydroxyl and at least one amino group).

The compounds containing isocyanate groups and the chain extenders that may be used, and their methods of use, include those which are known in the art for preparing further polymers, especially elastomers, from hydroxyl-terminated polyols (such as the polyols of general formula II mentioned previously) - see for example US patent 4 086 214 (including the review of the prior art therein), and also standard textbooks.

For the sake of clarity, however, we shall mention two examples of suitable compounds containing isocyanate groups, namely "MDI" (i.e. 4,4'-diisocyanatodiphenylmethane) and "TDI" (i.e. 2,4- and/or 2,6-diisocyanatotoluene). We mention likewise as examples of suitable amine chain extenders "MOCA" (i.e. 3,3'-dichloro-4,4'- diaminodiphenylmethane) and 1,4-dichloro-3,5-diaminobenzene. We mention, also likewise, as suitable hydroxylic chain extenders ethan-1,2-diol and butan-1,4-diol.

The present invention will now be more particularly described with reference to the following Examples, of which Examples 1 to 4 illustrate the production of polymers of the general formula I wherein y=0 and z=2, whereas Examples 5 and 6 illustrate the direct production of a

mixture of a polymer of the general formula I with a polymer of the general formula II.

EXAMPLE 1

In this Example, the polyol used was a poly(epsilon -caprolactone) diol of molecular weight 2000 prepared by the polymerisation of epsilon -caprolactone with a polyethylene glycol of molecular weight 1000 as initiator.

The catalyst used was 1,4-diazabicyclo (2.2.2.) octane as manufactured by Air Products and Chemicals Inc., of Pennsylvania, USA under the name "Houdry Dabco" ("Dabco" is a registered trade mark).

The preparation was performed in a 700 $cm^3$ flask. The flask was fitted with a stirrer and with a temperature-sensing device to enable its contents to be heated in a controlled manner on an electric mantle. There was an inlet tube by means of which nitrogen gas could be bubbled through the contents of the flask. There was also an outlet through which gases from the flask could be passed out into the atmosphere, either via a rotary pump or via an anti-suck-back device containing polyol (which depending, of course, on the pressure in the flask).

400 g (0.20 mol) of the polyol were placed in the flask and were heated to 50 °C with sparging under vacuum (i.e. nitrogen was bubbled into the polyol with simultaneous pumping). At 50 °C the pressure in the flask was brought up to atmospheric with nitrogen, and then 66 g of isatoic anhydride (0.40 mol, if 98 % purity is assumed) and 2.5 g of Dabco were added and stirring was commenced. The reaction began to occur slowly (for the method of observing the progress of the reaction, see the text above). A slow nitrogen bubble was used to maintain in the flask a pressure of inert gas (nitrogen and evolved carbon dioxide) of slightly above atmospheric, and the temperature was raised further. At 80 °C, the reaction was very fast, and the reaction mixture was held at this temperature for 30 minutes. Then the temperature was raised to 90 °C for 1 hour, and to 130 °C for 1 hour to complete the reaction.

The overall reaction time was 3 hours. Then, also at 130 °C, the product was sparged under vacuum for 1 hour to remove volatiles.

The product was a brown liquid with blue fluorescence when hot, and being a relatively viscous brown liquid at 21 °C. Its amine content was estimated by titration, in glacial acetic acid, against $HClO_4$. 2 g of the product required 15.7 $cm^3$ of a 0.1 mol dm $^{4-3}$ solution compared with the theoretical titre of 17.6 $cm^3$. The acid value was 10 mg KOH per g of product (phenolphthalein indicator).

EXAMPLE 2

The polyol used in this Example was 400 g (0.20 mol) of a poly(epsilon -caprolactone) diol of molecular weight 2000 prepared by polymerising epsilon -caprolactone with neopentyl glycol as initiator. As in Example 1, 66 g (0.40 mol) isatoic anhydride was used.

The procedure was as described in Example 1 with the exceptions that only 2 g Dabco were used and the reaction temperatures and times were different. The reaction did not begin until 80 - 90 °C and was fast at 100 - 110 °C, at which temperature the mixture was held for 2 hours. Then the mixture was held at 120 - 130 °C for 1 and a half hours to complete the reaction. The overall reaction time was 4 and a half hours.

The product was similar in appearance to that of Exampe 1, but at 21 °C it was a waxy solid. The titre of $HClO_4$ solution was 17.9 $cm^3$ compared with the theoretical titre of 17.6 $cm^3$. The acid value was 5 mg KOH per g of product.

EXAMPLE 3

The polyol used in this case was 400 g (0.20 mol) of Diorez 750 as supplied by Briggs and Townsend Ltd., of Cheshire, England. Diorez 750 is an ethylene glycol/butylene glycol adipate polyester of molecular weight 2000. As in Example 1, 66 g (0.40 mol) isatoic anhydride was used.

The procedure was as described in Example 1 with the

exceptions that only 2 g Dabco was used; that two antioxidants were added at the same time, namely butylated hydroxytoluene (0.4 g)

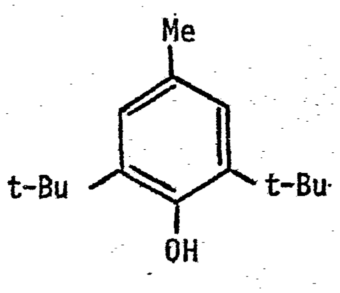

and ditridecyl thiodipropionate (0.2 g)

$$C_{13}H_{27}-O-CO-C_2H_4-S-C_2H_4-CO-O-C_{13}H_{27}$$

and that the reaction temperatures and times were different. The reaction began at 80 °C, and the mixture was held for 1 hour at each of the temperatures 80 ° C, 90 °C, 100 °C, and 120-130 °C, after which the reaction ceased. The total reaction time was 4 and a half hours.

In this case the product was similar in appearance to that of Example 1 except that it was somewhat less brown. The titre of $HClO_4$ solution was 17.75 $cm^3$ compared with the theoretical 17.6 $cm^3$, and the acid value was 7.78 mg KOH per g of product.

EXAMPLE 4

1286 g (0.64 mol) of the polyol used in Example 1 was placed in a 2000 $cm^3$ flask (fitted in a similar manner to the flask of Example 1) together with 212 g isatoic anhydride (1.27 mol) and (as antioxidants) 2.4 g butylated hydroxytoluene, 1.2 g ditridecyl thiodipropionate, and 1.0 g triphenyl phosphite. The mixture thus obtained was stirred and sparged under vacuum for 1 hour at 80 °C. Then the pressure was brought up to atmospheric with nitrogen, and 3 g of Dabco were added, whereupon the reaction began. Stirring was continued. Thereafter, the procedure was similar to that of Example 1, except that the reaction temperatures and times were as follows : half an hour at 80 °C; 2 and a half hours at 100 - 110 °C; half an hour at

120 °C; and half an hour at 130 °C - total reaction time 4 and a half hours.

The product was similar to that of Example 1 except that the titre of $HClO_4$ solution (16.75 $cm^3$) was nearer to theoretical and the acid value was improved (7 mg KOH per g of product)

Use of products of Examples 1 to 4

Each of the products can be used in the production of a polyurethane - polyurea elastomer by the use of the following, fairly typical, procedure :-

62.1 g of the product and 30 g of 4,4'-diisocyanatodiphenylmethane

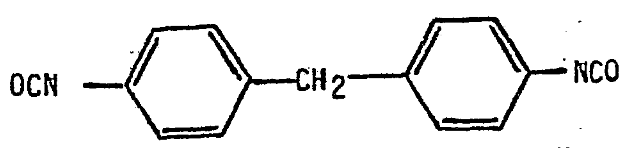

(ISONATE 125M as supplied by Upjohn Polymer N.V., 's-Hertogenbosch 4002, Netherlands) are reacted at 80 °C for 1 hour. 7.9 g butan-1,4-diol (a chain extender) at 21 °C is mixed in and the mixture is degassed. The mixture is then poured into a mould coated with CONTOUR 1711 (sold by Compounding Ingredients Ltd., Manchester), and cured at 110 °C for 24 hours and at 21 °C for 14 days. The cure at 110 °C can conveniently be interrupted by demoulding once the product has achieved sufficient dimensional stability.

EXAMPLE 5

In this Example, the polyol used was a poly(epsilon -caprolactone) diol of molecular weight 550 prepared by the polymerisation of epsilon -caprolactone with diethylene glycol ($HOCH_2CH_2OCH_2CH_2OH$) as the initiator. 164.4 g (0.30 mol) of the polyol and 35.6 g (0.21 mol) isatoic anhydride was sparged under vacuum for 1 hour at 80 °C (the flask used contained no stirrer - on this scale of operation the sparging provided reasonable

agitation). Then the reaction mixture was cooled to 70 °C (in anticipation of high catalyst reactivity), the pressure was brought up to 1 atmosphere with nitrogen, and 1 g of N, N, N', N'- tetramethylethylethylenediamine was added and the reaction began immediately. Then the temperature was raised slowly with the use of a slow nitrogen bubble to maintain a pressure of inert gas (nitrogen and evolved carbon dioxide) above the reaction mixture. The reaction was fast at 74 °C. The temperature of the mixture was raised to 140 °C and then held at 140 °C. The total time from addition of the catalyst to completion of the reaction was 2 hours.

The product was a very slightly cloudy golden brown liquid.

## EXAMPLE 6

The polyol used was the same as in Example 5, and the quantities of polyol and isatoic anhydride were also the same. These were sparged at 80 °C as in Example 5, and then the pressure was brought up to atmospheric pressure with nitrogen. 1 g of N,N-dimethylaniline was added (the reaction mixture being still at 80 °C). No reaction was immediately evident, and the temperature was raised slowly. At 100 °C the reaction began. The temperature of the reaction mixture was raised to 140 °C and then held at 140 °C. The total time from commencement of the reaction to its completion was 4 and a half hours.

The product was a slightly cloudly golden brown liquid.

CLAIMS :-

1. A polymer of the general formula I

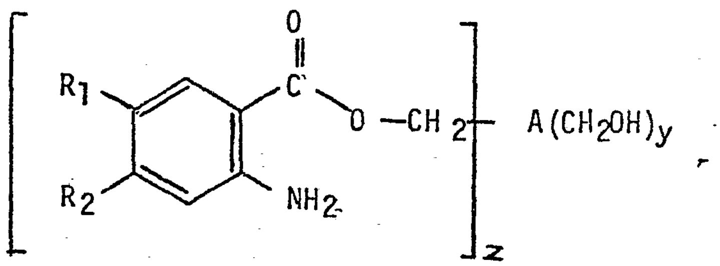

I

wherein each of $R_1$ and $R_2$, which may be the same or different, represents a hydrogen atom or a methyl group,
wherein $-A(CH_2OH)y$ represents a straight or branched chain polymeric entity having y + z chain endings and contains a plurality of ester linkages and,
wherein y has the value 0 or a positive integral value and z has a positive integral value, (y + z) being from 2 to 8.

2. A polymer asclaimed in claim 1, wherein the entity represented by$-A(CH_2OH)y$ contains a plurality of units, any two of which may be the same of different, and each of which is of the general formula

$$-CO-Y-CO-O-CH_2-X-CH_2-O-$$

wherein X represents a direct bond or a straight- or branched-chain alkylene group of not more than 8 carbon atoms; and wherein Y represents a straight- or branched-chain alkylene group of not more than 8 carbon atoms.

3. A polymer as claimed in claim 2, wherein, in at least some of the units, X represents a direct bond or an ethylene group.

4. A polymer as claimed in claim 2 or claim 3, wherein, in at least some of the units, Y represents a 1,4-butylene group.

5. A polymer as claimed in any one of claims 1 to 4,

wherein the entity represented by-$A(CH_2OH)y$ contains a plurality of units, any two of which may be the same or different, and each of which is of the general formula

$$-CO-Z-CH_2-O-$$

wherein Z represents a straight- or branched-chain alkylene group having a chain length of 4 or more carbon atoms and having not more than 9 carbon atoms.

6. A polymer as claimed in claim 5, wherein Z represents a 1,4-butylene group.

7. A polymer as claimed in any one of claims 2 to 6, wherein the entity represented by-$A(CH_2OH)y$ contains additionally a plurality of units, any two of which may be the same or different, and each of which is of the general formula

$$-CH_2-Q-CH_2-O-$$

wherein Q represents a direct bond or a straight- or branched-chain alkylene group of not more than 8 carbon atoms.

8. A polymer as claimed in claim 7, wherein Q represents a direct bond.

9. A polymer as claimed in claim 7 or claim 8, wherein at st some of the units of the general formula

$$-CH_2-Q-CH_2-O-$$

are arranged as a block in the entity-$A(CH_2OH)y$.

10. A polymer as claimed in any one of claims 1 to 9, wherein the entity A has a formula weight in the range from 300 to 5000.

11. A polymer as claimed in any one of claims 1 to 10, wherein (y + z) has a value of 2.

12. A polymer as claimed in any one of claims 1 to 11, wherein each of $R_1$ and $R_2$ represents a hydrogen atom.

13. A polymer as claimed in any one of claims 1 to 12,

wherein y has a value of 0.

14. A process for preparing a polymer as claimed in any one of the preceding claims, which comprises reacting a polymer of the general formula II,

$$A(CH_2OH)_{y+z} \qquad II$$

wherein A, y, and z have the meanings apropriate to the respective claim, with a compound of the general formula III,

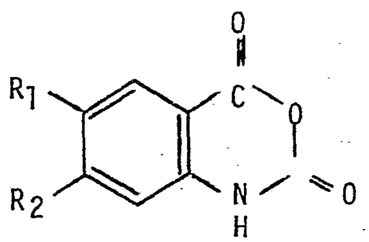

III

wherein $R_1$ and $R_2$ have the meanings appropriate to the respective claim.

15. A process as claimed in claim 14, wherein the reaction is performed in the presence of a tertiary amine as a catalyst.

16. A process as claimed in claim 15, wherein the tertiary amine has N bound only to saturated carbon atoms.

17. A process as claimed in claim 16, wherein the tertiary amine having N bound only to saturated carbon atoms is of the formula

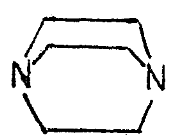

18. A process as claimed in claim 16, wherein the tertiary amine having N bound only to saturated carbon atoms is N, N, N', N',- tetramethylethylenediamine or

N-ethylpiperidine.

19. A process as claimed in any one of claims 15 to 18 wherein the weight of catalyst used is from 0.1 to 1 % of the total weight of the reaction mixture.

20. A process as claimed in any one of claims 15 to 19, wherein the reaction is completed at a temperature in the range from 100 °C to 160 °C.

21. A process for the production of a polymer containing urea linkages and ester linkages, which comprises reacting a polymer as claimed in any one of claims 1 to 13 with a compound containing two or more isocyanate groups in the molecule.

22. A process as claimed in claim 21, wherein a compound containing at least two primary amino groups, at least two hydroxyl groups, or at least one hydroxyl group and at least one primary amino group in the molecule is additionally reacted.

0021569

European Patent Office

**EUROPEAN SEARCH REPORT**

Application number

EP 80 30 1425

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR - A - 2 380 308 (BAYER)<br>* Page 35, claim 1; page 8, line 3 - page 11, line 25; page 17, line 11 - page 20, line 4, page 30, example 15 *<br>-- | 1-22 | C 08 G 63/68<br>63/76<br>18/46 |
| A | US - A - 3 808 250 (J. BLAHAK et al.)<br>* Column 1, abstract *<br>---- | 1 | |
| | | | TECHNICAL FIELDS SEARCHED (Int.Cl. 3) |
| | | | C 08 G 63/68<br>63/76<br>18/46 |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 11-09-1980 | STIENON |

EPO Form 1503.1 06.78